# EUROPÄISCHE PATENTSCHRIFT

(11) **EP 0 645 915 B1**
(45) Veröffentlichungstag und Bekanntmachung des Hinweises auf die Patenterteilung: **02.01.2003**
(21) Anmeldenummer: 94114227.5
(22) Anmeldetag: 09.09.1994
(51) Int. Cl.: H04L 27/10

(54) **Datenübertragungssystem**
Data link system
Système de liaison de données

(30) Priorität: 23.09.1993 DE 4332415
(43) Veröffentlichungstag der Anmeldung: 29.03.1995
(73) Patentinhaber: Infineon Technologies AG, 81669 München (DE)
(72) Erfinder: Reiner, Robert, Dipl.-Ing., D-82008 Unterhaching (DE)
(74) Vertreter: Epping Hermann & Fischer

(56) Entgegenhaltungen:
- EP-A- 0 570 761

## Beschreibung

Die Erfindung betrifft ein Datenübertragungssystem gemäß dem Oberbegriff des Anspruchs 1.

Derartige Datenübertragungssysteme finden insbesondere im Kfz-Bereich bei Schlüssel-Schloßsystemen Verwendung. Sie können aber auch bei Chipkartensystemen zum Einsatz kommen.

Aus der DE 34 02 737 ist z.B. ein derartiges System bekannt. Dort wird eine Vorrichtung zur gegenseitigen Informationsübertragung zwischen elektronischem Schloß und Schlüssel unter Verwendung von jeweils einer Spule beschrieben, wobei ein vom Schloß periodisches ausgesendetes Signal durch den Schlüssel empfangen wird. Dieser sendet unter Aktivierung einer im Schlüssel enthaltenen Schlüsselelektronik ein kodiertes Informationssignals an das Schloß. Zur Datenübertragung bedämpft der Schlüssel das von dem Schloß ausgesandte Signal je nach zu übertragender Information. Im Schloß kann diese Bedämpfung mittels eines Komparators erkannt werden und daraus die entsprechende Information dekodiert werden.

Der Schlüssel entzieht also dem magnetischen Wechselfeld, das durch die Spule des Schlosses aufgebaut wird, mehr oder weniger Energie und moduliert so die Amplitude auf der Schloßseite. Dabei treten grundsätzlich folgende Nachteile auf:
Der Schlüssel kann nicht durchweg bei Leistungs-Anpassung betrieben werden. Er muß während der Übertragung durch die Modulation zur Leistungsanpassung hin und deutlich davon weggesteuert werden.
Die Leistungsanpassung ist abhängig von der Kopplung zwischen Schloß und Schlüssel. Man kann z.B. nicht für alle Spulen und Abstände mit dem gleichen Arbeitspunkt arbeiten, weil sonst die Modulation unwirksam sein könnte.

Auf der Schloßseite ist die Amplitudenmodulation schwierig zu demodulieren, da der Träger zum Beispiel mit 1 Volt Amplitude auftritt, während die Änderung der Amplitude durch die Modulation nur einige Millivolt beträgt. Die Demodulation erfordert diskret aufgebaute Schaltungsteile, weil die Spannung für integrierte Schaltungen direkt am Schwingkreis zu hoch ist und Spannungsteiler auch die geringe Modulation dämpfen.

Aufgabe der vorliegenden Erfindung ist es ein Datenübertragungssystem anzugeben, welches die vorstehenden Nachteile beseitigt.

Diese Aufgabe wird durch den kennzeichnenden Teil des Anspruchs 1 gelöst. Weiterbildungen sind Kennzeichen der Unteransprüche.

Die Erfindung wird nachfolgend anhand einer Figur näher erläutert.

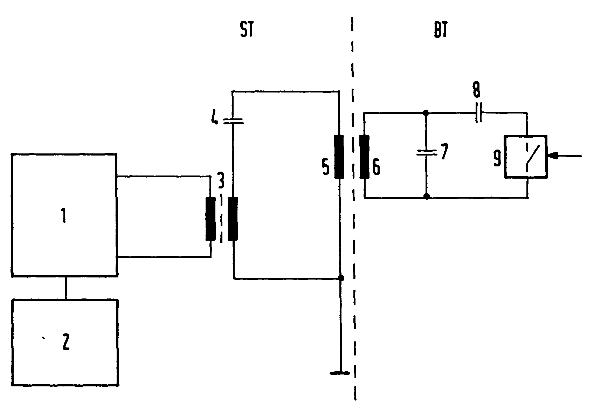

Es zeigt
- Figur 1: eine erfindungsgemäße Anordnung eines Datenübertragungssystems.

Mit ST ist ein stationärer Teil z.B. ein Schloß dargestellt. BT zeigt den Teil einer beweglichen Einheit, z.B. eines Schlüssels, der zur Datenübertragung dient. Dabei ist derjenige Teil nicht dargestellt, der zum Generieren der Versorgungsspannung für die bewegliche Einheit aus der von der Spule 7 empfangenen Energieschwingung notwendig ist. Mit 1 ist eine Steuereinheit dargestellt, die einen freischwingenden Generator zur Schwingungserzeugung beinhaltet. Daran angeschlossen ist ein Übertrager 3, dessen erster Übertragungskreis mit der Steuereinheit 1 verbunden ist. Der zweite Übertragungskreis bildet über eine Reihenschaltung eines Kondensators 4 und einer Übertragungsspule 5 mit dem zweiten Kreis des Übertragers 3 einen Schwingkreis. Desweiteren ist ein Frequenz-Demodulator 2 vorgesehen, der mit dem freischwingenden Generator der Steuereinheit 1 gekoppelt ist. Der Knotenpunkt der Übertragungsspule 5 sowie der Spule des Übertragers 3 ist mit Masse verschaltet.

Im beweglichen Teil ist parallel zu einer Übertragungsspule 6 eine Kapazität 7 geschaltet. Desweiteren ist die Übertragungsspule 6 über eine weitere Kapazität 8 mit einem steuerbaren Halbleiterschalter 9 verbunden. Der andere Anschluß des steuerbaren Halbleiterschalters 9 ist mit dem anderen Anschluß der Übertragungsspule 6 verschaltet. Der steuerbare Halbleiterschalter 9 weist einen Steuereingang auf, an dem die zu übertragenden Daten zugeführt werden können.

Der im stationären Teil befindliche Sender wird freischwingend betrieben, mit der Senderspule 5 als Teil des frequenzbestimmenden Kreises. Über die lose Kopplung wird dann durch die Impedanzänderung im beweglichen Teil die Frequenz des Senders im Schloß moduliert. Dies geschieht durch wahlweises zusätzliches Parallelschalten von z.B. einer weiteren Kapazität 8 zur Kapazität 7 über den steuerbaren Halbleiterschalter 9. Durch diese Impedanzänderung wird die Frequenz des Senders im stationären Teil moduliert.

Selbstverständlich sind auch andere Ausführungsformen zur Frequenzmodulation möglich.

Die Anordnung weist den Vorteil auf, daß ein relativ großer Frequenzhub durch die gewählte Anordnung mit dem freischwingenden Oszillator bei Frequenzmodulation im beweglichen Teil erreicht werden kann. Durch diese Eigenschaft wird eine wesentlich erhöhte Störsicherheit gegenüber anderen Modulationsverfahren gewährleistet.

## Patentansprüche

1. Datenübertragungssystem bestehend aus einer stationären Einheit (ST) und einer beweglichen Einheit (BT), bei der jeweils in der stationären Einheit (ST) und in der beweglichen Einheit (BT) eine Spule (6; 7) zur kontaktlosen Übertragung von Energie und Daten vorgesehen ist, wobei die stationäre Einheit (ST) die bewegliche
- Einheit (BT) mit Energie versorgt, mit einer in der stationären Einheit (ST) vorgesehenen Steuereinheit (1) zur Ansteuerung der Übertragungsspule (6),
**dadurch gekennzeichnet, daß**
- der im stationären Teil (ST) befindliche Übertragungskreis freischwingend ist,
- der bewegliche Teil einen Impedanzmodulator aufweist, der in Abhängigkeit der zu übertragenden Daten die Impedanz des im beweglichen Teil (BT) befindlichen Übertragungskreises moduliert, so daß die Frequenz der zu übertragenden Energieschwingung im stationären Teil (ST) moduliert wird,
- der stationäre Teil Mittel zur Frequenzdetektion (2) aufweist.

2. Datenübertragungssystem nach Anspruch 1,
**dadurch gekennzeichnet, daß** die bewegliche Einheit (BT) ein steuerbares Schaltelement (10) sowie eine dazu in Reihe geschaltete Kapazität (9) aufweist, die parallel zur Spule geschaltet sind.

3. Datenübertragungssystem nach Anspruch 1 oder 3,
**dadurch gekennzeichnet, daß** die stationäre Einheit (ST) einen Übertrager aufweist, dessen einer Kreis mit der Steuereinheit (1) verbunden ist und dessen anderer Kreis mit der Übertragungsspule (6) verbunden ist.

## Claims

1. Data transmission system comprising a stationary unit (ST) and a movable unit (BT), in which a coil (6; 7) for the contactless transmission of energy and data is provided in each case in the stationary unit (ST) and in the movable unit (BT), the stationary unit (ST) supplying the movable unit (BT) with energy, having a control unit (1) provided in the stationary unit (ST) and serving for driving the transmission coil (6),
**characterized in that**
- the transmission circuit situated in the stationary part (ST) is free-running,
- the movable part has an impedance modulator which modulates the impedance of the transmission circuit situated in the movable part (BT) in a manner dependent on the data to be transmitted, so that the frequency of the energy oscillation to be transmitted is modulated in the stationary part (ST),
- the stationary part has means for frequency detection (2).

2. Data transmission system according to Claim 1,
**characterized in that** the movable unit (BT) has a controllable switching element (10) and a capacitance (9) connected in series therewith, which are connected in parallel with the coil.

3. Data transmission system according to Claim 1 or 2,
**characterized in that** the stationary unit (ST) has a transformer, one of whose circuits is connected to the control unit (1) and whose other circuit is connected to the transmission coil (6).

## Revendications

1. Système de transmission de données constitué d'une unité immobile (ST) et d'une unité mobile (BT), dans lequel il est prévu dans l'unité immobile (ST) et dans l'unité mobile (BT) une bobine (6 ; 7) destinée transmettre sans contact de l'énergie et des données, l'unité immobile (ST) alimentant en énergie l'unité mobile (BT), une unité de commande (1) étant prévue dans l'unité immobile (ST) en vue d'attaquer la bobine de transmission (6), **caractérisé en ce que** :
- le circuit de transmission se trouvant dans la partie immobile (ST) est à oscillation libre,
- la partie mobile comporte un modulateur d'impédance qui module l'impédance du circuit de transmission se trouvant dans la partie mobile (BT) en fonction des données à transmettre de sorte que la fréquence de l'énergie oscillante à transmettre dans la partie immobile (ST) est modulée,
- la partie immobile comporte des moyens de détection de fréquence (2).

2. Système de transmission de données selon la revendication 1, **caractérisé en ce que** l'unité mobile (BT) comporte un élément de commutation commandé (10) ainsi qu'un condensateur (9) monté série avec lui, lesquels sont montés en parallèle avec la bobine.

3. Système de transmission de données selon la revendication 1 ou 3, **caractérisé en ce que** l'unité immobile (ST) comporte un transmetteur dont un circuit est relié à l'unité de commande (1) et dont l'autre circuit est relié à la bobine de transmission (6).
